(19) Europäisches Patentamt
European Patent Office
Office européen des brevets

(11) **EP 0 640 783 B1**

(12) **EUROPÄISCHE PATENTSCHRIFT**

(45) Veröffentlichungstag und Bekanntmachung des Hinweises auf die Patenterteilung:
**11.09.1996 Patentblatt 1996/37**

(51) Int Cl.⁶: **F16K 15/04**, F16K 17/04

(21) Anmeldenummer: **94111719.4**

(22) Anmeldetag: **27.07.1994**

(54) **Hochdruck Absperrventil**

High pressure check valve

Clapet de non-retour à haute pression

(84) Benannte Vertragsstaaten:
**AT CH DE ES FR GB GR IE IT LI PT SE**

(30) Priorität: **23.08.1993 DE 4328299**

(43) Veröffentlichungstag der Anmeldung:
**01.03.1995 Patentblatt 1995/09**

(73) Patentinhaber:
• **Schneider, Francine**
  **F-67340 Ingwiller (FR)**
• **Loegel, Patrick**
  **F-67340 Lichtenberg (FR)**
• **Reichert, Sylvie**
  **67340 Ingwiller (FR)**
• **Durr, Isabelle**
  **F-67340 Ingwiller (FR)**
• **Loegel, Charles**
  **F-67340 Lichtenberg (FR)**
• **Loegel, Charles**
  **F-67340 Lichtenberg (FR)**

(72) Erfinder:
• **Schneider, Francine**
  **F-67340 Ingwiller (FR)**
• **Loegel, Patrick**
  **F-67340 Lichtenberg (FR)**
• **Reichert, Sylvie**
  **67340 Ingwiller (FR)**
• **Durr, Isabelle**
  **F-67340 Ingwiller (FR)**
• **Loegel, Charles**
  **F-67340 Lichtenberg (FR)**
• **Loegel, Charles**
  **F-67340 Lichtenberg (FR)**

(74) Vertreter: **Müller, Hans-Jürgen, Dipl.-Ing. et al**
**Müller, Schupfner & Gauger**
**Postfach 10 11 61**
**80085 München (DE)**

(56) Entgegenhaltungen:
**DE-U- 8 801 759**          **FR-A- 2 480 394**
**US-A- 3 260 279**          **US-A- 4 706 705**

**Beschreibung**

Die Erfindung bezieht sich auf ein Absperrventil für unter hohem Druck von insbesondere über 1000 bar stehende Flüssigkeit in einem Drucksystem der im Oberbegriff des Anspruchs 1 genannten Gattung.

Es sind bereits derartige Absperrventile, die als sogenannte "Rückschlag- bzw. Reiz-Ventil" bzw. als selbsttätige Strömungsschalter wirksam sind, bekannt (Europa-Lehrmittel "Kraftmaschinen, Fördermittel, Kraftübertragungselemente", 1. Auflage, Seite 57). bei denen der Ventilkörper als Kugel ausgebildet ist. Dabei ist auch bekannt, die Kugel durch spezielle Führungsorgane derart zu führen, daß sie nahe am Ventilsitz gehalten wird und Eigenrotation, Deplazierung oder Verklemmungen vermieden werden (FR-A-24 80 394).

Außerdem ist es auch bekannt, bei Federventilen als Druckeinrichtung eine Druckfeder zu verwenden (US-A-47 06 705). Sofern bei Drucksystemen mit einer hohen Förderleistung von insbesondere über 10 l/min in der gemeinsamen Druckleitung mehrere Förderpumpen über jweils eigene Absperrventile an die gemeinsame Druckleitung angeschlossen sind, ergeben sich jedoch schon nach relativ kurzer Betriebszeit von etwa 30 Stunden erhebliche Abnutzungen des Ventilsitzes.

Der Erfindung liegt die Aufgabe zugrunde, ein derartiges Hochdruckabsperrventil auf einfache Weise dahingehend zu verbessern, daß es sich trotz großer Förderleistung von beispielsweise 50 l/min und hohem Druck von beispielsweise 2400 bar durch längere Lebensdauer auszeichnet.

Überraschenderweise hat sich gezeigt, daß diese schon seit langem bekannte Aufgabe dann lösbar ist, wenn anstelle der Druckfeder als Druckeinrichtung eine Anzahl separater Druckringe verwendet ist. Der Stapel solcher Druckringe wird in einer Druckkammer angeordnet, die sich unter dem gleichen Druck wie das hydraulische Hochdrucksystem befindet, das den Absperrdruck des Ventilkörpers auf den Ventilsitz erzeugt. Ist dieser Absperrdruck größer als der Gegendruck, welcher den Ventilkörper vom Ventilsitz abzuheben sucht, dann befinden sich die Druckringe innerhalb des Hydraulikmediums in einem sehr kleinen Abstand voneinander, während bei einem den Absperrdruck überschreitenden Gegendruck gegen den Ventilkörper sich die Druckringe aneinander anlegen und sich hierdurch der Ventilkörper vom Ventilsitz um einen solchen Betrag abzuheben vermag, welcher der Summe der einzelnen Abstände der Druckringe voneinander im Sperrzustand des Ventilkörpers entspricht.

Es hat sich gezeigt, daß bei dieser erfindungsgemäßen Ausbildung des Absperrventils im Vergleich zur Verwendung einer Druckfeder als Druckorgan nicht nur die Förderleistung von etwa 50 l/min um etwa 10 % gesteigert werden kann, sondern daß bei Aufrechterhaltung des gleichen vom Manometer gemessenen Drukkes im Drucksystem von beispielsweise 2400 bar die Betriebszeit um ein Vielfaches gegenüber der nur kurzen Betriebszeit zwischen etwa 30 und 40 Stunden verlängert werden kann, da praktisch keine Verschleißerscheinungen am Ventilsitz auftreten. Die Ursache für dieses Phenomen ist noch nicht eindeutig ermittelt, könnte allerdings darin zu sehen sein, daß keine sich beim Entspannen einer gespannten Feder auftretende "Schläge" am Ventilsitz wirksam werden.

In Unteransprüchen sind weitere Ausbildungen der Erfindung beansprucht. Danach empfiehlt es sich, eine Kugel als Ventilkörper zu verwenden und am äußeren freien Ende einer Druckkammer einer Aufnahmehülse anzuordnen, in der sich der Stapel bzw. das Paket von Druckringen befindet. Hierbei empfiehlt es sich, den Durchmesser der Aufnahmekammer an derem freien Ende nur so groß zu wählen, daß die Ventilkugel nur einen kleinen Bewegungsspielraum zwischen der Sperrstellung und der vom Ventilkörper abgehobenen Stellung erhält, im übrigen aber nicht weit in die Aufnahmekammer hineingedrückt werden kann, sondern vielmehr das Hindurchtreten von Flüssigkeiten zwischen Ventilkugel und Mantel der Druckkammer absperrt. Damit die Druckkammer dennoch unter dem hydraulischen Druck des Drucksystems und daher unter dem Absperrdruck steht, ist sie mittels mindestens eines Durchtrittkanals mit der Druckleitung verbunden. Nach einer besonderen Ausbildung der Erfindung empfiehlt es sich, um die Aufnahmehülse herum einen Strömungsweg für Flüssigkeit von derem äußeren freien Ende im Bereich des Ventilkörpers längs des Außenmantels und durch Umwegkanäle und Durchbrechungen zu dem Durchtrittskanal zu schaffen. Es ist wesentlich, daß die Flüssigkeit innerhalb der Druckkammer unter dem Absperrdruck steht und durch die Bohrungen in den Druckringen als auch durch die Zwischenräumen zwischen den äußeren Rändern der Druckringe und der inneren Mantelfläche der Druckkammer entlangströmen kann, um das Vereinzeln (In-Abstand-Stellen) der einzelnen Druckringe schnell und wirksam zu ermöglichen.

Überraschendeweise hat sich gezeigt, daß eine spezielle Bemessung des Durchtrittsquerschnitts am Ventilsitz in Bezug zum Durchtrittsquerschnitt am Zulauf zu diesem Vorteile bietet: So empfiehlt es sich, wenn der Durchtrittsdurchmesser einer in den Strömungsweg zum Ventilsitz führenden Blende etwa 65 % bis 80 %, insbesondere zwischen 70 % und 75 % des Ventilsitzdurchmessers beträgt. Eine solche Blende wird zweckmäßigerweise zwischen dem Boden einer Aussparung in der den Ventilsitz bildenden Druckplatte und einer ringförmigen Aussparung an der Stirnfläche eines Ansatzes eines Verteilerstücks angeordnet, dessen axiale Innenbohrung eine Durchtrittsöffnung für Flüssigkeiten bildet, die beispielsweise von und zu einer Pumpe führt. Die ringförmige Aussparung an der Stirnfläche des Verteilerstückansatzes sollte über Verbindungskanäle mit dem Außenmantel des Verbindungsstücks in Verbindung stehen, so daß beim Ansaugen Flüssigkeit durch diese Verbindungskanäle zuerst in die ringförmige Aussparung und dann durch die axiale Innenbohrung zur Pumpe und beim Drücken durch die axiale Innenbohrung zurück und von dort über die Bohrung in der Blende zum Ventilsitz gelangt. Ist der von der Pumpe erzeugte Druck größer als der als Anpreßdruck dienende Druck im hydraulischen Drucksystem, hebt sich der Ventilkörper vom Ventilsitz ab und Flüssigkeit strömt durch das Absperrventil hindurch in die Druckleitung hinein. Die Parallelschaltung solcher Ventile zwischen Druckleitung und Ansaugleitung jeweils mit entsprechenden Pumpen und zweckmäßigerweise einer solchen zeitlichen Anordnung des Abhebens des Ventilkörpers vom Ventilsitz jeder Pumpe, daß dieses Abheben der parallel geschalteten Absperrventile nicht gleichzeitig, sondern über einen bestimmten Zeitraum verteilt erfolgt, erhöht die Förderleistung des Flüssigkeiten-Hochdruck-Fördersystems.

Das erfindungsgemäße Absperrventil eignet sich daher besonders vorteilhaft zur Verwendung in Flüssigkeits-Spritzanlagen, bei denen Flüssigkeit, wie Wasser, unter hohem Druck durch Düsen auf sehr harte Gegenstände, wie Stein, darunter Granit, oder Beton, gespritzt wird, um im Fels, Beton oder dergl. harten Gegenständen schmale Schlitze zu bilden.

Ein bevorzugtes Ausführungsbeispiel der Erfindung wird anhand der Zeichnung nun näher erläutert.

Dabei zeigen:

Fig. 1 ein schematisches Schaltbild des Einbaus von Absperrventilen in Parallelschaltung in ein Drucksystem;

Fig. 2 einen schematischen Querschnitt durch eine bevorzugte Ausbildung der Erfindung bei einem Rückschlagventil;

Fig. 3 eine vergröberte schematisierte Darstellung der Erfindung;

Fig. 4 einen Teilschnitt durch eine vom Ventilkörper abgesperrte Zuleitung innerhalb einer den Ventilsitz bildenden Druckplatte und eines sich anschließenden Verteilerstücks und

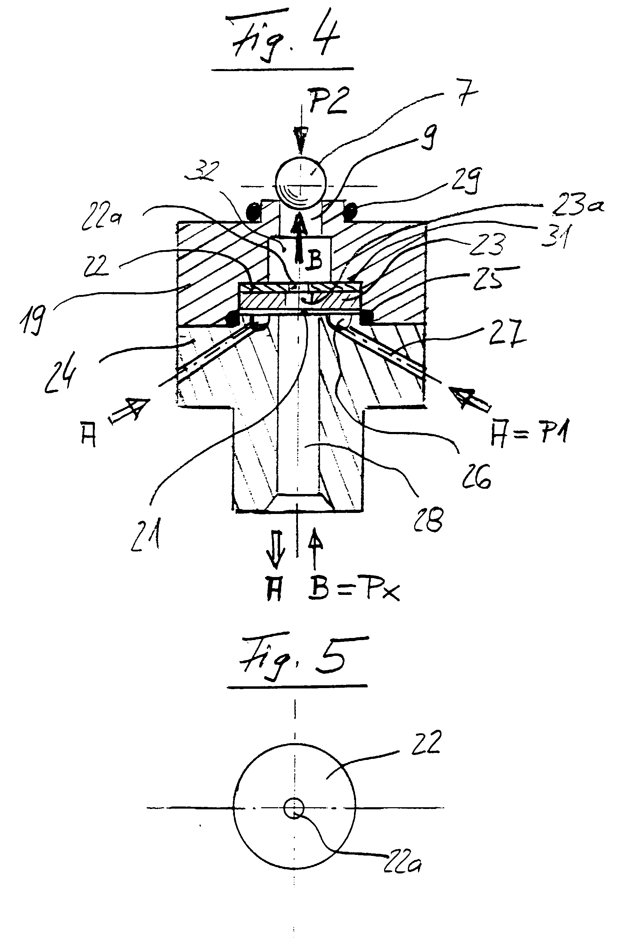

Fig. 5 eine Blende in Draufsicht.

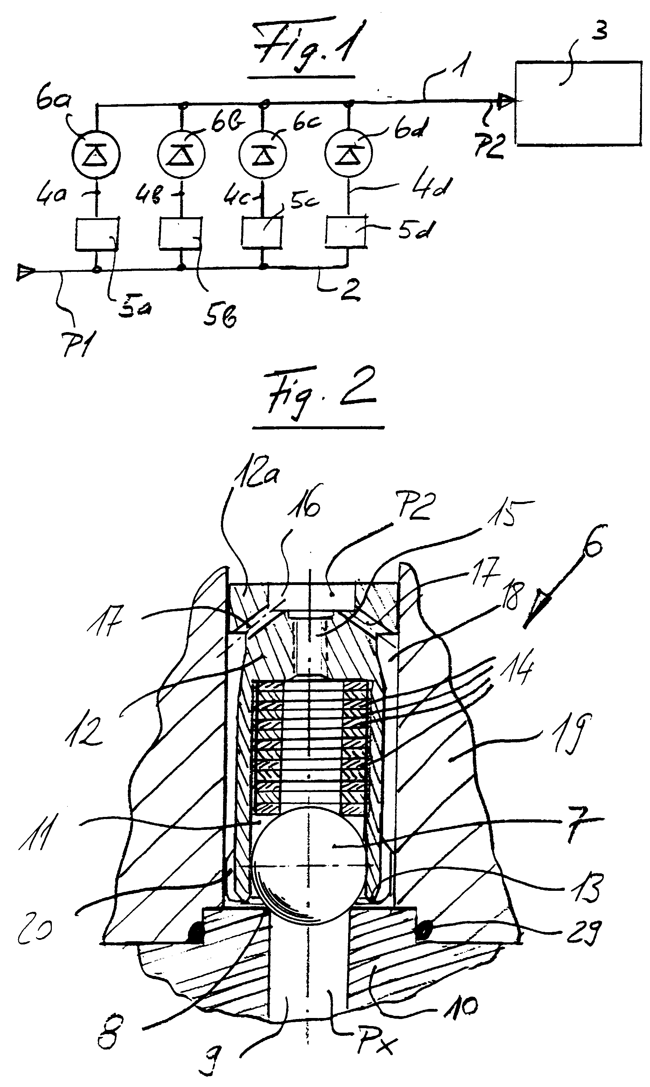

Gemäß Fig. 1 sind zwischen einer unter hohem Druck P2 von etwa 2400 bar (mit dem Manometer gemessener Druck) stehenden Druckleitung 1 und einer unter geringerem Saugdruck P1 stehenden Saugleitung 2 in Parallelschaltung jeweils Flüssigkeitsfördermittel 5a, 5b, 5c, 5d über je eine Verbindungsleitung 4a, 4b, 4c, 4d an jeweils ein als Rückschlagventil ausgebildetes Absperrventil 6a, 6b, 6c und 6d angeschlossen. Die Druckleitung 1 bedient beispielsweise eine Hochdruck-Wasserstrahlanlage 3 mit einer Förderleistung von über 50 l/min. Die Fördermittel 5a - 5d können Hochdruckpumpen sein, welche in der Lage sind, in den Verbindungsleitungen 4a - 4d höhere Drucke als den Absperrdruck P2 in der Druckleitung 1 zu erzeugen, um hierdurch das Abheben des jeweiligen Ventilkörpers vom Ventilsitz in den Hochdruckventilen 6a - 6d und daher das Zuführen von Flüssigkeit in die Druckleitung 1 über das jeweilige Absperrventil 6a - 6d auszulösen.

Gemäß Fig. 2 weist das Absperrventil 6 einen als Kugel ausgebildeten Ventilkörper 7 auf, der sich an den Ventilsitz 8 - die Flüssigkeitsströmung verhindernd - anlegt, der sich am Ende der axialen Bohrung 9 durch die Druckplatte 10 hindurch befindet. In dieser Bohrung 9 herrscht der Druck Px, der im Falle der Sperrstellung des Ventilkörpers 7 jedenfalls kleiner als der Druck P2 im Drucksystem 1 ist.

Der kugelförmige Ventilkörper 7 befindet sich am Ende der Druckkammer 11 einer Aufnahmehülse 12. Der Durchmesser der Druckkammer 11 vermindert sich vom freien äußeren Ende 13 ausgehend axial nach innen derart, daß dem Eindringen des Ventilkörpers 7 nach innen über einen gewissen Betrag hinaus ein Widerstand entgegensteht und der Ventilkörper 7 in dieser am weitesten in die Druckkammer 11 hineinbewegten Stellung die Druckkammer 11 in Richtung zu deren freien äußeren Ende 13 gewissermaßen abgedichtet ist. Innerhalb der Druckkammer 11 befindet sich ein Stapel von Druckringen 14. Diese haben einen etwas geringeren Außendurchmesser als der Durchmesser der Druckkammer 11, damit die Flüssigkeit des hydraulischen Mittels mit dem Druck P2 durch den Durchtrittskanal 15 hierdurch mit der hier nicht dargestellten Druckleitung 1 in Verbindung steht. An der Stirnseite 12a der Aufnahmehülse 12 befindet sich eine Aussparung 16, die einerseits mit der Druckleitung 1 in hier nicht dargestellter Weise, andererseits aber auch über Durchbrechungen 17 mit dem Raum 18 in Verbindung steht, welcher eine äußere Nut der Aufnahmehülse 12 bildet, die außen vom Maschinenteil 19 begrenzt ist. Rings um das äußere freie Ende 13 der Aufnahmehüle 12 sind radial etwa sternförmig verlaufende Rippen angeordnet, zwischen denen sich axiale Durchtrittskanäle 20 zwischen dem Ventilsitz 8 und dem von der äußeren Nut gebildeten Raum 18 befinden.

Der Durchtrittskanal 15 ist mit einem Innengewinde versehen, wodurch die Möglichkeit besteht, einen Schraubbolzen einzuschrauben und die Aufnahmehülse bei der Demontage aus der Platte 19 herauszuziehen. Zwischen der Druckplatte 10 und dem Maschinenteil 19 befindet sich ein O-Ring als Abdichtung 29.

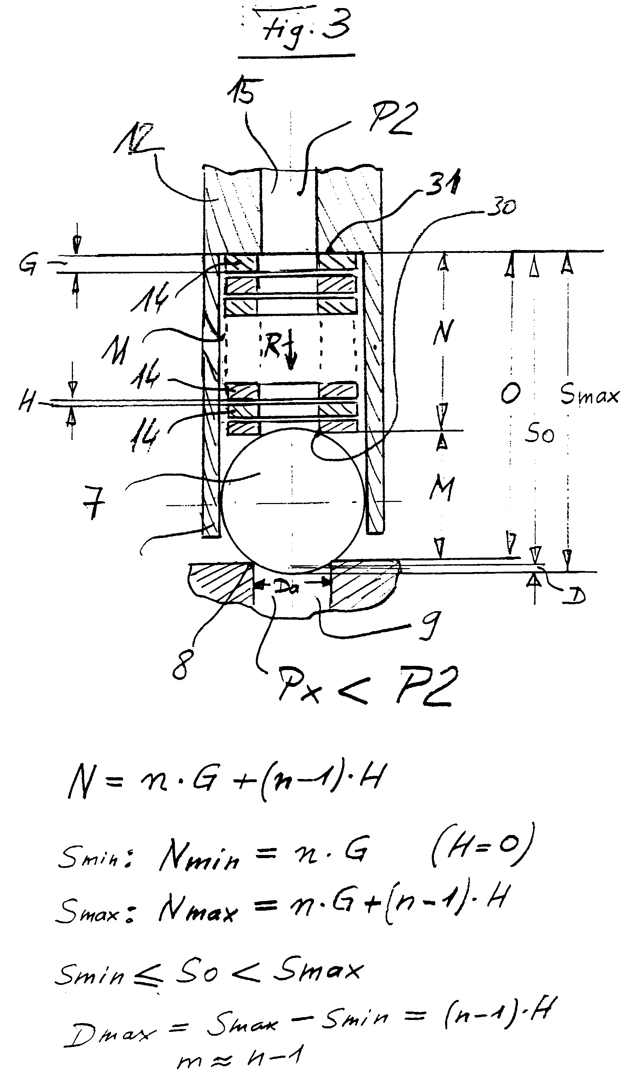

Obwohl in der schematischen Darstellung von Fig. 2 die Druckringe 14 aneinander zu stoßen scheinen, wenn der kugelförmige Ventilkörper 7 auf den Ventilsitz 8 gedrückt ist, befinden sich die Druckringe 14 in dieser Sperrstellung in Wirklichkeit in einem sehr geringen Abstand in der Größenordnung zwischen etwa 10 und 100 μm voneinander. Mit anderen Worten: in dieser Sperrstellung befinden sich die Druckringe 14 gemäß der in Fig. 3 stark vergrößerten Darstellung im Abstand H voneinander. Besteht der Stapel der Druckringe 14 mit einer Ringdicke D aus n Druckringen 14 und werden hierdurch n-1 Abstände H zwischen benachbarten Druckringen 14 gebildet, dann beträgt der Maximalabstand Nmax zwischen der Anlage 30 des in Fig. 3 dargestellten untersten Druckrings 14 und der Kugeloberfläche des Ventilkörpers 7

$$Nmax = n.G + (n-1).H$$

Dabei wird davon ausgegangen, daß der Absperrdruck P2 in der Flüssigkeit auch in der Druckkammer 11 herrscht und die Flüssigkeit den Abstand H zwischen dem Druckringen 14 ausfüllt und den Ventilkörper 7 in Richtung R auf den Ventilsitz 8 drückt, solange der Flüssigkeitdruck Px im Kanal 9 unterhalb des Ventilsitzes 8 kleiner als der Absperrdruck P2 ist.

Wird dagegen der Druck Px größer als der Absperrdruck P2, dann wird der Ventilkörper 7 vom Ventilsitz 8 um beispielsweise die Strecke D hochgedrückt. Die Abstände H zwischen den Druckringen 14 verkleinern sich, bis sie in der Endstellung zu Null werden und der Minimalabstand zwischen der Schulter 31 und der Anlagelinie 30 des untersten Druckrings 14 mit der Kugeloberfläche des Ventilkörpers 7

$$Nmin = n.G$$

beträgt. Der Abstand N ergänzt durch den Abstand M zwischen dieser Anlagelinie 30 des untersten Druckrings 14 an der Kugeloberfläche und dem Ventilsitz 8 ergänzen sich zur Gesamtstrecke O zwischen dem Ventilsitz 8 und der Schulter 31 am inneren Ende der Druckkammer 11.

Die Gesamtstrecke S zwischen dieser als Anschlag dienenden Schulter 31 und dem unteren Ende des Ventilkörpers 7 beträgt in der Sperrstellung Smax, in der am weitesten nach oben gedrückten Stellung des Ventilkörpers 7 - bei aneinanderliegenden Druckringen 14 - und in Zwischenstellungen So in Abhängigkeit von der Strecke D, um die der Ventilkörper 7 nach oben gedrückt ist und einen entsprechenden Spalt zwischen seiner Mantelfläche und dem Ventilsitz 8 freigibt. Die maximale Strecke, die in erster Näherung dem Abstand der Kugelfläche des Ventilkörpers 7 vom Ventilsitz 8 entspricht, beträgt

$$Dmax = Smax - Smin = (n-1).H$$

unter der Annahme, daß die Anzahl m der Abstände H etwa n-1 beträgt.

Bei einem Ausführungsbeispiel werden 12 Druckringe 14 mit einer Ringdicke D = 2 mm, einem Innendurchmesser von 10 mm und einem Außendurchmesser von 17,5 mm verwendet. Die Kugel weist einen Durchmesser von 18 mm auf und der Durchmesser Da des Kanals bzw. der Innenbohrung 9, der auch praktisch dem Durchmesser des Ventilsitzes 8 entspricht, beträgt ebenso wie der Innendurchmesser der Druckringe 14 10 mm. Die Umfangslinie des Ventilsitzes 8 beträgt daher

$$U = \Pi. Da = 31,4 \text{ mm.}$$

Der Strömungsquerschnitt zwischen dem Ventilsitz 8 und dem Ventilkörper 7 in der am weitesten vom Ventilsitz 8 abgehobenen Stellung desselben (bei Dmax) beträgt etwa 25 mm$^2$, wenn Dmax 0,8 mm ist.

Gemäß Fig. 4 weist die Druckplatte 19 eine Aussparung 21 auf, die zur Aufnahme zweier Blenden 22, 23 dient, die jeweils eine Blendenöffnung 22a, 23a aufweisen. Der Querschnitt der kleinsten Blendenöffnung 22a bestimmt den Strömungsquerschnitt der Flüssigkeit, die in Strömungsrichtung B unter dem Druck Px von beispielsweise einer Hochdruckpumpe gegen den Ventilkörper 7 gedrückt wird. Da die Blenden 22, 23 sind an den Anschlag 31 am inneren Ende der zylindrischen Aussparung 21 der Druckplatte 19 gedrückt. Es hat sich überraschenderweise gezeigt, daß bestimmte Relationen zwischen dem kleinsten Strömungsquerschnitt an der Blendenöffnung 22a und dem Strömungsquerschnitt am Ventilsitz 8 in der abgehobenen Stellung des Ventilkörpers 7 besondere Vorteile bietet: Ohne Verwendung der Blenden 22, 23 treten nämlich im Hochdrucksystem sogenannte "Schläge" auf, wenn beispielsweise auf die beispielsweise als flexibler Schlauch ausgebildete Druckleitung 1 getreten wird. Ist der Strömungsquerschnitt der Blendenöffnung 22a nicht zu viel größer als der Strömungsquerschnitt am Ventilsitz 8 in der am meisten abgehobenen Stellung des Ventilkörpers 7, dann werden solche "Schläge" wesentlich gemildert. Optimale Verhältnisse sind dann anzutreffen, wenn bei dem oben genannten Durchmesser Da der Bohrung 9 von 10 mm, was einem Strömungsquerschnitt F8 am Ventilsitz 8 bei am weitesten abgehobener Stellung des Ventilkörpers 7 von etwa 25 mm$^2$ entspricht, der Durchmesser der Blendenöffnung 22a etwa 7,2 mm beträgt. Die Querschnittsfläche F22a der Blendenöffnung 22a beträgt dann 40,69 mm$^2$. Das Verhältnis des Strömungsquerschnitts F22a an der Blendenöffnung 22a zum Strömungsquerschnitt F8 am Ventilsitz 8 beträgt dann 1,62.

Es empfielt sich, dieses Querschnittsverhältnis F22a : F8 im Bereich zwischen 1,2 und 2,0, insbesondere zwischen 1,4 und 1,8 zu wählen. Dabei ist es vorteilhaft, wenn zwischen der Blende 22 und dem Ventilkörper 7 ein Zwischenraum 32 mit wesentlich größerem Durchmesser als der Blendenöffnung 23a gebildet ist, um "Druckwellen" abzufangen.

Die zylindrische Kammer 21 in der Druckplatte 19 wird unten durch einen Ansatz eines Verteilerstückes 24 mittels eines O-Ringes 25 abgedichtet. Dabei ist an der den Blenden 22, 23 zugewandten Stirnseite des Verteilerstücks 24 eine ringförmige Aussparung 26 angeordnet, in welche Verbindungsleitungen 27 führen, welche Flüssigkeit in Pfeilrichtung A aus der Saugleitung 2 unter dem Saugleitungsdruck P1 in die zylindrische Kammer 21 und daher auch in den Kanal 28 und von dort in Pfeilrichtung A zur nicht dargestellten Pumpe bei deren Saughub führen. Übt die Pumpe den gegenläufigen Druckhub aus, wird die Flüssigkeit in Pfeilrichtung B unter dem Flüssigkeitsdruck Px zurückgedrückt, bis sie den Absperrdruck P2 übersteigt und bei abgehobenem Ventilkörper 7 in der oben beschriebenen Weise in die Druckleitung 1 gefördert wird.

**Patentansprüche**

1. Absperrventil (6) für unter hohem Druck von insbesondere über 1000 bar stehende Flüssigkeit in einem Drucksystem, mit einem Ventilkörper (7), der die Durchtrittsöffnung an einem Ventilsitz unter einem Absperrdruck mittels einer gegen den Ventilkörper drückenden Druckeinrichtung in Sperrstellung absperrt, bis der zum Abheben des Ventilkörpers vom Ventilsitz gerichtete Flüssigkeitsdruck größer ist als der Absperrdruck,
**dadurch gekennzeichnet,**
daß die Druckeinrichtung keine Druckfeder sondern eine Anzahl (n) von Druckringen (14) aufweist, die derart als Stapel nebeneinander bzw. übereinander angeordnet sind, daß die Axialrichtung (R) des Stapels bzw. der Druckringe (14) im wesentlichen der Richtung des Absperrdrucks (P2) der unter Druck stehenden Flüssigkeit auf den Ventilkörper (7) gegen den Ventilsitz (8) entspricht, und die derart im wesentlichen in dieser Axialrichtung (R) bewegbar sind, daß sie im Falle der Anlage benachbarter Druckringe (14) aneinander das Abheben des Ventilkörpers (7) vom Ventilsitz (8) erlauben, sich in der Sperrstellung dagegen im wesentlichen in geringem Abstand (H) voneinander befinden.

2. Absperrventil nach Anspruch 1,
**dadurch gekennzeichnet,**
daß der maximale Abstand (Dmax) der Summe (m) der einzelnen Abstände (H) der Druckringe (14) im Sperrzustand des Ventilkörpers (7) entspricht.

3. Absperrventil nach Anspruch 1 oder 2,
**dadurch gekennzeichnet,**
daß die Druckringe (14) in einer Druckkammer (11) einer Aufnahmehülse (12) angeordnet sind, an derem äußeren freien Ende (13) sich der Ventilkörper (7) befindet, während das innere Ende der Druckkammer (11) als Anschlag (31) für den innersten Druckring (14) dient und mittels eines Durchtrittskanals (15) mit der unter dem Absperrdruck (P2) stehenden Flüssigkeit in Verbindung steht.

4. Absperrventil nach einem der vorhergehenden Ansprüche,
**dadurch gekennzeichnet,**
daß eine Kugel als Ventilkörper (7) verwendet ist.

5. Absperrventil nach Anspruch 3 oder 4,
**dadurch gekennzeichnet,**
daß die Aufnahmekammer (12) einen solchen zum freien Ende (13) zunehmenden Durchmesser aufweist, daß die Druckringe (14) einen Radialabstand zur Kammerwand aufweisen, während der Ventilkörper (7) nur ein Stück weit in die Aufnahmekammer (11) eintreten kann und diese in einer zurückgedrückten Stellung verschließt.

6. Absperrventil nach einem der Ansprüche 3 - 5,
**dadurch gekennzeichnet,**
daß die Aufnahmehüle (12) Umwegkanäle (20) für die Flüssigkeit außerhalb der Druckkammer 11 vom äußeren freien Ende (13) derselben bis zum Durchtrittskanal (15) aufweist.

7. Absperrventil nach Anspruch 6,
**dadurch gekennzeichnet,**
daß die Aufnahmehülse (12) Durchbrechungen (17) aufweist, die von einer äußeren Nut (18) durch die Aufnahmehülse (12) hindurch in einen Innenraum (16) führen, der sich an dem Ende der Aufnahmehülse (12) befindet, der dem äußeren freien Ende (13) der Druckkammer (11) abgewandt ist.

8. Absperrventil nach einem der vorhergehenden Ansprüche,
**dadurch gekennzeichnet,**
daß sich der Ventilsitz (8) an einer Druckplatte (10) befindet, die eine Aussparung (21) zur Aufnahme mindestens einer Blende (22, 23) aufweist, welche den Durchtrittsquerschnitt von Flüssigkeit zum Ventilsitz (8) begrenzt.

9. Absperrventil nach Anspruch 8,
**dadurch gekennzeichnet,**
daß die Blende (22) eine Blendenöffnung (22a) mit einem Durchmesser von etwa 0,65 - 0,8 % des Durchmessers (Da) des Ventilsitzes (8) aufweist.

10. Absperrventil nach Anspruch 9,
**dadurch gekennzeichnet,**
daß der Durchmesser der Blendenöffnung (22a) etwa das 0,7 bis 0,75-fache des Ventilsitzdurchmessers (Da) beträgt.

11. Absperrventil nach einem der Ansprüche 8 - 10,
**dadurch gekennzeichnet,**
daß die Blende (22, 23) innerhalb der Aussparung (21) zwischen dem Aussparungsboden (31) und einer ringförmigen Aussparung (26) an der Stirnfläche eines Ansatzes eines Verteilerstücks (24) angeordnet ist, dessen axiale Innenbohrung (28) eine Durchtrittöffnung für Flüssigkeit bildet, und daß die ringförmige Aussparung (26) über Verbindungskanäle (27) mit dem Außenmantel des Verteilerstücks (24) und einer Saugleitung (2) in Verbindung steht.

## Claims

1. A check valve (6) for liquids being subjected to high pressure of more than 1000 bar, particularly, in a pressure system, comprising a valve body (7) shutting off the through opening on a valve seat under a shut-off pressure by means of a pressure means pressing against the valve body in the locking position until the liquid pressure directed from the valve seat for lifting off the valve body is higher than the shut-off pressure,
**characterized in**
that the pressure means comprises, instead of a pressure spring, a number (n) of separate thrust collars (14) being disposed as a stack adjacent or, respectively, on top of each other so that the axial direction (R) of the stack or the thrust collars (14), respectively, substantially corresponds to the direction of the shut-off pressure (P2) of the liquid under pressure on the valve body (7) against valve seat (8) and that said collars may substantially be moved in said axial direction (R) such that they permit the valve body (7) to be lifted off the valve seat (8) in the case of adjacent thrust collars, but are at substantially at a small spacing (H) from each other in the locking position.

2. A check valve according to claim 1,
**characterized in**
that the maximum distance (Dmax) corresponds to the sum (m) of the individual spacings (H) of the thrust collars (14) in the locking condition of the valve body (7).

3. A check valve according to claim 1 or 2,
**characterized in**
that the thrust collars (14) are disposed in a pressure chamber (11) of a receiving sleeve (12) at whose outer free end (13) the valve body (7) is situated whereas the inner end of pressure chamber (11) serves as a stop (31) for the innermost thrust collar (14) and communicates with the liquid under the shut-off pressure (P2) by means of a through channel (15).

4. A check valve according to any of the preceding claims,
**characterized in**
that a ball is used as the valve body (7).

5. A check valve according to claim 3 or 4,
**characterized in**
that the receiving chamber (12) comprises a diameter increasing towards the free end (13) such that the thrust collars (14) comprise a radial spacing against the chamber wall whereas the valve body (7) may penetrate into the receiving chamber (11) over just a small distance only and closes it in a pressed-back position.

6. A check valve according to any of claims 3 - 5
**characterized in**
that the receiving sleeve (12) comprises detour channels (20) for the liquid outside the pressure chamber (11) from the outer free end thereof (13) up to the through channel (15).

7. A check valve according to claim 6,
**characterized in**
that the receiving sleeve (12) comprises openings (17) leading from an outer groove (18) through the receiving sleeve (12) into an inner space (16) which is situated at the end of receiving sleeve (12) facing away from the outer free end (13) of the pressure chamber (11).

8. A check valve according to any of the preceding claims,
**characterized in**
that the valve seat (8) is situated on a pressure plate (10) comprising a recess (21) for receiving at least one aperture (22, 23) limiting the through cross-section of liquid to the valve seat (8).

9. A check valve according to claim 8,
**characterized in**
that the aperture (22) comprises an aperture opening (22a) having a diameter of about 0.65 to 0.8 % of the diameter (Da) of the valve seat (8).

10. A check valve according to claim 9,
**characterized in**
that the diameter of the aperture opening (22a) is about 0.7 to 0.75 times the valve seat diameter (Da).

11. A check valve according to any of claims 8 to 10,
**characterized in**
that the aperture (22, 23) is disposed within the recess (21) between the recess bottom (31) and an annular recess (26) on the front face of an extension of a distributor piece (24) whose axial inner bore (28) constitutes a through opening for liquids, and that the annular recess (26) communicates with the outer jacket of the distributor piece (24) and a suction pipe (2) via connecting channels (27).

## Revendications

1. Soupape d'arrêt (6) pour liquide sous haute pression, en particulier supérieure à 1 000 bar, dans un système de pression, avec un corps de soupape (7), qui ferme l'orifice de passage sur un siège de soupape, sous une pression d'arrêt, au moyen d'un dispositif de pression, pressant contre le corps de soupape en position de fermeture, jusqu'à ce que la pression de liquide, dirigée vers le relèvement du corps de soupape par rapport au siège de soupape, soit supérieure à la pression d'arrêt, caractérisée en ce que le dispositif de pression ne comporte pas un ressort de pression mais un nombre n de bagues de pression (14), qui sont juxtaposées ou superposées en pile de manière que la direction axiale (R) de la pile ou des bagues de pression (14) corresponde sensiblement à la direction de la pression d'arrêt (P2) du liquide sous pression, sur le corps de soupape (7) contre le siège de soupape (8), et qui sont déplaçables sensiblement dans cette direction axiale (R) de manière qu'en cas d'application de bagues de pression (14) voisines les unes contre les autres, elles permettent le relèvement du corps de soupape (7) par rapport au siège de soupape (8), mais en revanche se trouvent en position d'arrêt sensiblement à une faible distance (H) les unes des autres.

2.   Soupape d'arrêt selon la revendication 1, caractérisée en ce que la distance maximale (Dmax) correspond à la somme (m) des différentes distances (H) des bagues de pression (14) à l'état d'arrêt du corps de soupape (7).

3.   Soupape d'arrêt selon la revendication 1 ou 2, caractérisée en ce que les bagues de pression (14) sont placées dans une chambre de pression (11) d'un manchon de logement (12), à l'extrémité (13) libre extérieure duquel se trouve le corps de soupape (7) tandis que l'extrémité intérieure de la chambre de pression (11) sert de butée (31) à la bague de pression (14) la plus intérieure et est en liaison au moyen d'un canal de passage (15) avec le liquide se trouvant sous la pression d'arrêt (P2).

4.   Soupape d'arrêt selon l'une des revendications précédentes, caractérisée en ce qu'on utilise une bille comme corps de soupape (7).

5.   Soupape d'arrêt selon la revendication 3 ou 4, caractérisée en ce que le manchon de logement (12) présente un diamètre augmentant vers l'extrémité libre (13), de manière que les bagues de pression (14) présentent une distance radiale par rapport à la paroi de la chambre, tandis que le corps de soupape (7) peut pénétrer seulement un peu dans la chambre de pression (11) et ferme celle-ci dans une position repoussée.

6.   Soupape d'arrêt selon l'une des revendications 3 à 5, caractérisée en ce que le manchon de logement (12) présente des canaux de dérivation (20) pour liquide à l'extérieur de la chambre de pression (11), de l'extrémité libre (13) extérieure de celle-ci jusqu'au canal de passage (15).

7.   Soupape d'arrêt selon la revendication 5, caractérisée en ce que le manchon de logement (12) présente des ajours (17), qui mènent d'une rainure extérieure (18), à travers le manchon de logement (12), dans un volume intérieur (16), qui se trouve à l'extrémité du manchon de logement (12), qui est tourné à l'opposé de l'extrémité libre (13) extérieure de la chambre de pression (11).

8.   Soupape d'arrêt selon l'une des revendications précédentes, caractérisée en ce que le siège de soupape (8) se trouve contre une plaque de pression (10), qui présente une découpe (21) destinée à recevoir au moins un obturateur (22, 23), qui délimite la section transversale de passage du liquide vers le siège de soupape (8).

9.   Soupape d'arrêt selon la revendication 8, caractérisée en ce que l'obturateur (22) présente une ouverture d'obturateur (22a) avec un diamètre d'environ 0,65 à 0,8 % du diamètre (Da) du siège de soupape (8).

10.   Soupape d'arrêt selon la revendication 9, caractérisée en ce que le diamètre de l'ouverture d'obturateur (22a) est environ égal de 0,7 à 0,75 fois le diamètre (Da) du siège de soupape.

11.   Soupape d'arrêt selon l'une des revendications 8 à 10, caractérisée en ce que l'obturateur (22, 23) est placé à l'intérieur de la découpe (21), entre le fond de découpe (31) et une découpe annulaire (26), sur la face frontale d'un appendice d'un distributeur (24), dont le perçage intérieur axial (28) forme un orifice de passage pour le liquide, et en ce que la découpe annulaire (26) communique par des canaux de liaison (27) avec l'enveloppe extérieure du distributeur (24) et une conduite d'aspiration (2).

Fig.1

Fig. 2

*Fig. 3*

$$Px < P2$$

$$N = n \cdot G + (n-1) \cdot H$$

$$S_{min}: \quad N_{min} = n \cdot G \qquad (H=0)$$

$$S_{max}: \quad N_{max} = n \cdot G + (n-1) \cdot H$$

$$S_{min} \leq S_0 < S_{max}$$

$$D_{max} = S_{max} - S_{min} = (n-1) \cdot H$$

$$m \approx n-1$$

Fig. 4

Fig. 5